# EUROPÄISCHE PATENTSCHRIFT

(11) **EP 2 291 434 B1**
(45) Veröffentlichungstag und Bekanntmachung des Hinweises auf die Patenterteilung: **08.08.2012**
(21) Anmeldenummer: 09765534.4
(22) Anmeldetag: 04.06.2009
(51) Int. Cl.: C08G 65/00, C08G 65/30

(54) **VERFAHREN ZUR HERSTELLUNG VON POLVOLEN**
METHOD FOR PRODUCING POLYOLS
PROCÉDÉ DE FABRICATION DE POLYOLS

(30) Priorität: 16.06.2008 DE 102008028555
(43) Veröffentlichungstag der Anmeldung: 09.03.2011
(73) Patentinhaber: Bayer MaterialScience AG, 51368 Leverkusen (DE)
(72) Erfinder: LORENZ, Klaus, 41539 Dormagen (DE); WERNER, Arnulf, 41540 Dormagen (DE); EICHMANN, Marcus, 40547 Düsseldorf (DE)
(86) Internationale Anmeldenummer: PCT/EP2009/003981
(87) Internationale Veröffentlichungsnummer: WO 2009/152954

(56) Entgegenhaltungen:
- EP-A- 0 050 181
- EP-A- 2 028 211
- WO-A-98/20061
- WO-A-2004/083276

## Beschreibung

Gegenstand der vorliegenden Erfindung sind über ein einfaches Verfahren erhältliche Polyole. Weitere Gegenstände der Erfindung sind das Verfahren selbst sowie die Verwendung der erfindungsgemäßen Polyole zur Herstellung von Polyurethanwerkstoffen.

Zur Herstellung von Polyurethanwerkstoffen wie Weich- oder Hartschaumstoffen bzw. massiven Werkstoffen wie Elastomeren geeignete Polyole werden im Allgemeinen durch Polymerisation geeigneter Alkylenoxide auf polyfunktionelle, d. h. mehrere Zerewitinoffaktive Wasserstoffatome enthaltende Starterverbindungen erhalten. Für die Durchführung dieser Polymerisationsreaktionen sind seit langem die verschiedensten Verfahren bekannt, die sich zum Teil komplementär ergänzen:
Von großtechnischer Bedeutung ist zum einen die basisch katalysierte Anlagerung von Alkylenoxiden an Starterverbindungen mit Zerewitinoff-aktiven Wasserstoffatomen, zum anderen die gewinnt die Verwendung von Doppelmetallcyanidverbindungen ("DMC-Katalysatoren") für die Durchführung dieser Reaktion zunehmend an Bedeutung. Mit dem Einsatz hochaktiver DMC-Katalysatoren, die z.B. in US-A 5 470 813, EP-A 700 949, EP-A 743 093, EP-A 761 708, WO 97/40086, WO 98/16310 und WO 00/47649 beschrieben sind, ist die Polyetherpolyolherstellung bei sehr geringen Katalysatorkonzentrationen (25 ppm oder weniger) möglich, so dass eine Abtrennung des Katalysators aus dem fertigen Produkt nicht mehr erforderlich ist. Diese Katalysatoren sind jedoch für die Herstellung von kurzkettigen Polyolen oder von Polyolen auf Basis aminogruppenhaltiger Starter nicht geeignet. Die seit langem bekannten basischen Katalysatoren, z. B. auf Basis von Alkalimetallhydroxiden, erlauben die problemlose Herstellung kurzkettiger Polyole und/oder von Polyolen auf Basis aminogruppenhaltiger Starter, der Katalysator muss aber in aller Regel mittels eines separaten Aufarbeitungsschritts aus dem alkalischen Rohpolymerisat entfernt werden. Speziell im Falle der Herstellung aminogruppenhaltiger Polyole werden häufig gelb bis gelbbraun gefärbte Produkte erhalten; für bestimmte Anwendungen, z. B. bei Lacken und Beschichtungen, sind gefärbte Ausgangsstoffe nicht erwünscht. Die durch (Lewis-)-Säuren katalysierte Anlagerung von Alkylenoxiden an geeignete Starterverbindungen ist von untergeordneter Bedeutung.

Die basisch katalysierte Anlagerung von Alkylenoxiden wie beispielsweise Ethylenoxid oder Propylenoxid an Starterverbindungen mit Zerewitinoff-aktiven Wasserstoffatomen erfolgt, wie bereits erwähnt in Gegenwart von Alkalimetallhydroxiden, es können aber auch Alkalimetallhydride, Alkalimetallcarboxylate, Erdakalihydroxide oder Amine wie beispielsweise N,N-Dimethylbenzylamin oder Imidazol- bzw. Imidazolderivate eingesetzt werden. Bei aminogruppenhaltigen Startern mit an Stickstoffatome gebundenen Zerewitinoff-aktiven Wasserstoffatomen können bis zu ein mol Alkylenoxide pro mol Zerewitinoff-aktiven Wasserstoffatomen unkatalysiert angelagert werden, wird dieses Verhältnis überschritten muss in der Regel einer der oben erwähnten basischen Katalysatoren zugegeben werden. Nach erfolgter Anlagerung der Alkylenoxide müssen die polymerisationsaktiven Zentren an den Polyetherketten deaktiviert werden. Hierfür sind verschiedene Vorgehensweisen möglich. Beispielsweise kann mit verdünnten Mineralsäuren wie Schwefelsäure oder Phosphorsäure neutralisiert werden. Die Stärke der zweiten Dissoziationsstufe der Schwefelsäure reicht zur Protonierung der durch Hydrolyse der aktiven Alkoholatgruppen entstehenden Alkalimetallhydroxide aus, so dass pro mol eingesetzter Schwefelsäure 2 mol Alkoholatgruppen neutralisiert werden können. Phosphorsäure hingegen muss äquimolar zur Menge der zu neutralisierenden Alkoholatgruppen eingesetzt werden. Die bei der Neutralisation und/oder während der Abdestillation des Wassers entstehenden Salze müssen in der Regel mittels Filtrationsverfahren abgetrennt werden. Destillations- und Filtrationsprozesse sind zeit- und energieintensiv und zudem in manchen Fällen nicht gut reproduzierbar. Es sind daher viele Verfahren entwickelt worden, die ohne Filtrationsschritt und in vielen Fällen auch ohne Destillationsschritt auskommen: Die Neutralisation mit Hydroxycarbonsäuren wie beispielsweise Milchsäure wird in WO 98/20061 und US-A 2004167316 für die Aufarbeitung kurzkettiger Polyole für Hartschaumanwendungen beschrieben, es handelt sich hierbei um weitverbreitete und gut etablierte Verfahren. In US-A 4521548 wird beschrieben, wie die polymerisationsaktiven Zentren in ähnlicher Weise durch Umsetzung mit Ameisensäure deaktiviert werden können. Die nach Neutralisation mit Hydroxycarbonsäuren bzw. Ameisensäure entstehenden Metallcarboxylate sind in den Polyetherpolyolen klar löslich. Nachteilig bei diesen Verfahren ist jedoch die für viele Polyurethananwendungen unerwünschte katalytische Aktivität der in den Produkten verbleibenden Salze. In WO 04/076529 werden die Polymerisationsreaktionen daher bei niedrigen Katalysatorkonzentrationen von 10 - 1000 ppm KOH durchgeführt, so dass die nach Neutralisation im Polyol verbleibenden katalytisch aktiven Hydroxycarbonsäuresalze ebenfalls in geringer Konzentration vorliegen und somit nachgeschaltete Reaktionen weniger stark stören. In JP-A 10-30023 und US-A 4110268 werden zur Neutralisation aromatische Sulfonsäuren bzw. organische Sulfonsäuren eingesetzt, die ebenfalls in den Polyetherpolyolen lösliche Salze bilden, welche aber weniger basisch sind und sich durch geringe katalytische Aktivität auszeichnen. Ein entscheidender Nachteil sind hier die hohen Kosten der Sulfonsäuren. Die Aufarbeitung mittels saurer Kationenaustauscher, wie sie in DE-A 100 24 313 beschrieben ist, erfordert den Einsatz von Lösungsmitteln und deren destillative Abtrennung und ist somit ebenfalls mit hohen Kosten verbunden. Phasentrennverfahren erfordern lediglich einen Hydrolyse-, jedoch keinen Neutralisationsschritt und sind beispielsweise beschrieben in WO 0 1/14456, JP-A 6-157743, WO 96/20972 und US-A 3823145. Mit dem Einsatz von Koalescern oder Zentrifugen wird die Phasentrennung der Polyetherpolyole von der alkalischen wässrigen Phase unterstützt, oft müssen auch hier Lösungsmittel zugesetzt werden, um den Dichteunterschied zwischen der Polyetherphase und der Wasserphase zu erhöhen. Solche Verfahren sind nicht für alle Polyetherpolyole geeignet, insbesondere versagen sie bei kurzkettigen Polyetherpolyolen oder Polyetherpolyolen mit hohen Ethylenoxidanteilen. Der Einsatz von Lösungsmitteln ist kostenintensiv und Zentrifugen erfordern einen hohen Instandhaltungsaufwand.

Bei aminisch katalysierten Alkylenoxidadditionsreaktionen kann auf eine weitere Aufarbeitung verzichtet werden, sofern die Anwesenheit der Amine in diesen Polyolen die Herstellung von Polyurethanwerkstofien nicht beeinträchtigt. Über aminische Katalyse können nur Polyole mit verhältnismäßig niedrigen Äquivalentgewichten erhalten werden, siehe hierzu beispielsweise Ionescu et al. in "Advances in Urethane Science & Technology", 1998,14, S. 151-218.

Aufgabe der vorliegenden Erfindung, war es daher, ein preiswertes Aufarbeitungsverfahren für unter Alkalihydroxid-Katalyse aminogruppenhaltige Polyole, einschließlich ethylenoxidhaltiger aminogruppenhaltiger Polyole, zu finden, welches die Nachteile der Verfahren des Standes der Technik nicht aufweist. Erfindungsziel war insbesondere der Erhalt aminogruppenhaltiger Polyole mit geringer Eigenfarbe. Gejenstand der Erfindung sind Verfahren zur Herstellung von Polyolen, derart Hergestellt Polyole und die Verwendung solches Polyole zur Herstellung von Polymethanen gemäss den Ansprüchen 1-4.

Die Aufgabe konnte gelöst werden, indem die Neutralisation der alkalischen, polymerisationsaktiven Zentren des rohen Alkylenoxidadditionsproduktes durch Zugabe von 0,75 bis 1 mol Schwefelsäure pro mol Katalysator bewerkstelligt wird. Man erhält nach dieser Vorgehensweise klare Produkte, die überraschenderweise eine geringere Eigenfärbung aufweisen als Produkte, bei denen mit weniger als 0,75 mol Schwefelsäure pro mol Katalysator neutralisiert wird. Die Methode ist auf lang- und kurzkettige Polyetherpolyole anwendbar, d. h. der OH-Zahl-Bereich der Endprodukte erstreckt sich von etwa 20 mg KOH/g bis etwa 1.000 mg KOH/g. Die Struktur der Polyetherketten, d. h. die Zusammensetzung der bei der Herstellung der Polyole eingesetzten Alkolenoxide bzw. des Alkylenoxidgemisches, kann ebenfalls variiert werden.

Im Einzelnen wird das erfindungsgemäße Verfahren wie folgt durchgeführt:

Die Starterverbindungen werden üblicherweise im Reaktor vorgelegt und ggf. bereits mit dem Katalysator, also dem Alkalimetallhydroxid, , versetzt. Bevorzugt-ist Kaliumhydroxid. Der Katalysator kann der oder den Starterverbindung(en) als wässrige Lösung oder als Feststoff zugeführt werden. Die auf die Endproduktmenge bezogene Katalysatorkonzentration beträgt 0,004 bis 0,1 Gew.-%, bevorzugt 0,01 bis 0,1 Gew.-%, besonders bevorzugt 0,025 bis 0,1 Gew.%. Das Lösungswasser und/oder das bei der Reaktion der Starterverbindungen mit dem Katalysator freigesetzte Wasser kann vor Beginn der Dosierung des oder der Alkylenoxide(s) im Vakuum bei erhöhter Temperatur, bevorzugt bei Reaktionstemperatur, entfernt werden, vorausgesetzt, dass die eingesetzten Starterverbindungen einen hinreichend niedrigen Dampfdruck besitzen. Alternativ kann zunächst Alkylenoxid auch katalysatorfrei addiert werden und die Zugabe des Alkalimetallhydroxids sowie der Entwässerungsschritt erst nach Erreichen eines hinreichend niedrigen Dampfdrucks der Starterspezies durchgeführt werden. Bei niedrigen Katalysatorkonzentrationen kann auf die Entwässerung auch verzichtet werden.

Die im Reaktor vorgelegten Starterverbindungen werden nun unter Inertgasatmosphäre bei Temperaturen von 80 - 180 °C, bevorzugt bei 100 - 170 °C mit Alkylenoxiden zur Reaktion gebracht, wobei die Alkylenoxide in der gängigen Weise dem Reaktor kontinuierlich derart zugeführt werden, dass die sicherheitstechnischen Druckgrenzen des verwendeten Reaktorsystems nicht überschritten werden. Üblicherweise werden solche Reaktionen im Druckbereich von 10 mbar bis 10 bar durchgeführt. Soll, wie bereits oben erwähnt, das oder die Alkylenoxid(e) zunächst katalysatorfrei addiert werden, so ist die Alkylenoxiddosierung an geeigneter Stelle zu unterbrechen und nach Verstreichen einer angemessenen Nachreaktionszeit der Katalysator zuzusetzen. Nach Ende der Alkylenoxiddosierphase schließt sich eine Nachreaktionsphase an, in der restliches Alkylenoxid abreagiert. Das Ende dieser Nachreaktionsphase ist erreicht, wenn kein weiterer Druckabfall im Reaktionskessel feststellbar ist. Die Neutralisation der alkalischen, polymerisationsaktiven Zentren des rohen Alkylenoxidadditionsproduktes erfolgt nun durch Zugabe von 0,75 bis 1 mol Schwefelsäure pro mol Katalysator, bevorzugt von 0,8 bis 1 mol Schwefelsäure pro mol Katalysator, besonders bevorzugt 0,9 bis 1 mol Schwefelsäure pro mol Katalysator, ganz besonders bevorzugt 0,95 bis 1 mol Schwefelsäure pro mol Katalysator. Die Temperatur kann bei der Neutralisation in weiten Bereichen variiert werden, Grenzen können hierbei durch den Polyolaufbau gegeben sein. Sind hydrolyseempfindliche Gruppen, wie beispielsweise Estergruppen, in den Produkten zugegen, kann beispielsweise bei Raumtemperatur neutralisiert werden. Nach erfolgter Neutralisation können Wasserspuren, die durch Zugabe der verdünnten Säure eingebracht wurden, im Vakuum entfernt werden. Den Produkten können während oder nach der Neutralisation Alterungsschutzmittel bzw. Antioxidantien zugesetzt werden. Eine Kristallisation der Salze kann durch Zugabe von Wasser in Mengen von 2 Gew.-% bis 20 Gew.-% bezogen auf die Masse des alkalischen Polymerisates vor oder während der Neutralisation und dessen anschließende Entfernung durch Destillation gefördert werden.

Geeignete aminogruppenhaltige Starterverbindungen weisen meist Funktionalitäten, zu verstehen als die Zahle der pro Startermolekül vorhandenen Zerewitinoff-aktiven Wasserstoffatome, von 1 bis 4 auf. Bevorzugt enthalten die aminogruppenhaltigen Starterverbindungen wenigstens eine primäre Aminogruppe (-NH₂) und/oder sekundäre Aminogruppe und/oder tertiäre Aminogruppe. Ihre Molmassen betragen von 17 g/mol bis etwa 1.200 g/mol. Beispiele für aminogruppenhaltige Starterverbindungen sind Ammoniak, Ethanolamin, Diethanolamin, Triethanolamin, Isopropanolamin, Diisopropanolamin, Ethylendiamin, Hexamethylendiamin, Anilin, die Isomere des Toluidins, die Isomere des Diaminotoluols, die Isomere des Diaminodiphenylmethans sowie bei der Kondensation von Anilin mit Formaldehyd zu Diaminodiphenylmethan anfallende höherkernige Produkte. Es können natürlich auch Gemische verschiedener aminogruppenhaltiger Starterverbindungen eingesetzt werden. Ferner können auch Gemische aus aminogruppenhaltigen Startern und aminogruppenfreien Startern eingesetzt werden. Der Gehalt an aminogruppenhaltigen Startern im Startergemisch sollte mindestens 20 mol-% betragen. Beispiele für aminogruppenfreie Starter sind Methanol, Ethanol, 1-Propanol, 2-Propanol und höhere aliphatische Monole, insbesondere Fettalkohole, Phenol, alkylsubstituierte Phenole, Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Pentaerythrit, Sorbit, Saccharose, Hydrochinon, Brenzcatechin, Resorcin, Bisphenol F, Bisphenol A, 1,3,5-Trihydroxybenzol oder methylolgruppenhaltige Kondensate aus Formaldehyd und Phenol. Außerdem können Melamin oder Harnstoff, sowie Mannichbasen als (Co-)Starter fungieren

Ferner können dem Prozess auch vorgefertigte Alkylenoxidadditionsprodukte der erwähnten aminogruppenhaltigen bzw. aminogruppenfreien Starterverbindungen, also Polyetherpolyole mit OH-Zahlen von 20 bis 1.000 mg KOH/g, bevorzugt 250 bis 1.000 mg KOH/g, zugesetzt werden. Auch ist es möglich, im erfindungsgemäßen Prozess neben den Starterverbindungen auch Polyesterpolyole mit OH-Zahlen im Bereich von 6 bis 800 mg KOH/g mit dem Ziel der Polyetheresterherstellung einzusetzen. Hierfür geeignete Polyesterpolyole können beispielsweise aus organischen Dicarbonsäuren mit 2 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen nach bekannten Verfahren hergestellt werden.

Vor dem Hintergrund der Verknappung petrochemischer Ressourcen und der nachteiligen Bewertung fossiler Rohstoffe in Ökobilanzen gewinnt der Einsatz von Rohstoffen aus nachwachsenden Quellen auch bei der Herstellung von für die Polyurethanindustrie geeigneten Polyolen zunehmend an Bedeutung. Das erfindungsgemäße Verfahren eröffnet eine hochwirtschaftliche Möglichkeit zur Herstellung solcher Polyole, indem vor oder während der Addition der Alkylenoxide Triglyceride wie beispielsweise Sojaöl, Rapsöl, Palmkernöl, Palmöl, Leinöl, Sonnenblumenöl, Heringsöl, Sardinenöl, Lesquerellaöl und Ricinusöl dem Prozess in Mengen von 10 - 80 Gew.%, bezogen auf die Endproduktmenge, zugesetzt werden. Man erhält Polyetheresterpolyole, in deren Struktur die Öle vollständig eingebaut sind, so dass sie im Endprodukt nicht mehr oder nur in sehr geringen Mengen nachgewiesen werden können. Überraschenderweise ergeben auch Öle ohne Hydroxygruppen bei dieser Verfahrensvariante homogene Endprodukte.

Die eingsetzten Alkylenoxide sind ausgewählt aus Propylenoxid, 1,2-Butylenoxid bzw. 2,3-Butylenoxid und Styroloxid. Bevorzugt wird Propylenoxid eingesetzt. Die verschiedenen Alkylenoxide können im Gemisch oder blockweise dosiert werden.

Die alkalischen Rohpolyole weisen im Allgemeinen OH-Zahlen von 20 bis 1.000 mg KOH/g, bevorzugt OH-Zahlen von 28 bis 700 mg KOH / g auf.

Die nach dem erfindungsgemäßen Verfahren erhältlichen Polyole können als Ausgangskomponenten für die Herstellung von massiven oder geschäumten Polyurethanwerkstoffen sowie von Polyurethanelastomeren eingesetzt werden. Die Polyurethanwerkstoffe und -elastomere können auch Isocyanurat-, Allophanat- und Biuretstruktureinheiten enthalten. Ebenfalls möglich ist die Herstellung sogenannter Isocyanat-Prepolymere, bei deren Herstellung ein molares Verhältnis von Isocyanatgruppen zu Hydroxygruppen von größer 1 verwendet wird, so dass das Produkt freie Isocyanatfunktionalitäten enthält. Diese werden erst bei der Herstellung des eigentlichen Endproduktes in einem oder mehreren Schritten umgesetzt.

Zur Herstellung dieser Materialien werden die erfindungsgemäßen Polyole gegebenenfalls mit weiteren isocyanatreaktiven Komponenten gemischt und mit organischen Polyisocyanaten, gegebenenfalls in Gegenwart von Treibmitteln in Gegenwart von Katalysatoren, gegebenenfalls in Gegenwart anderer Zusatzstoffe wie z. B. Zellstabilisatoren, zur Reaktion gebracht.

### Beispiele

### Eingesetzte Rohstoffe:

### Irganox^{®} 1076: Octadecyl-3-(3,5-di-tert.butyl-4-hydroxyphenyl)propionat

### Beispiel 1 (Herstellung Polyol)

In einen 10 1 Laborautoklaven wurden unter Stickstoffatmosphäre 1046,1 g Ethylendiamin gegeben. Restsauerstoff wurde nach Schließen des Befüllstutzens durch dreimaliges Aufdrücken von 3 bar Stickstoff und anschließendes Ablassen des Überdrucks auf Atmosphärendruck entfernt. Man erwärmte unter Rühren (450 U / min) auf 150 °C und dosierte 3711,5 g Propylenoxid über einen Zeitraum von 3 h in den Autoklaven. Man ließ 1 h nachreagieren und kühlte sodann auf 80°C ab. Nach Zugabe von 2,815 g einer 44,82 Gew.-%igen wässrigen Lösung von KOH wurde das Wasser über einen Zeitraum von 1 h bei 150 °C im Vakuum (20 mbar) durch Strippen mit Stickstoff (50 ml / min) entfernt. Anschließend wurden 1244,2 g Propylenoxid über einen Zeitraum von 2,5 h eindosiert. Es schloss sich eine Nachreaktionszeit von 1,5 h Dauer an. Nach einer Ausheizzeit von 30 min im Vakuum und Abkühlen auf Raumtemperatur wurden dem Ansatz zwei Anteile für Neutralisationsversuche (Beispiele 1A und 1B) entnommen. Die Katalysatorkonzentration (KOH) betrug 210 ppm.

### Beispiel 1 A (Vergleich) (Neutralisation mit 0,50 mol Schwefelsäure pro mol KOH)

1305,2 g des Produktes aus Beispiel 1 wurden bei 80 °C mit 2,028 g 11,82 %iger Schwefelsäure, entsprechend 0,50 mol Schwefelsäure pro mol KOH, versetzt und 1 h bei 80 °C verrührt. Nach Zugabe von 0,88 g Irganox^{®} 1076 wurde das Produkt 1 h bei 18 mbar (Wasserstrahlvakuum) und anschließend bei 110 °C und 1 mbar 3 h entwässert. Man erhielt ein klares Produkt.

### Beispiel 1 B

1307,6 g des Produktes aus Beispiel 1 wurden bei 80 °C mit 4,064 g 11,82 %iger Schwefelsäure, entsprechend 1,00 mol Schwefelsäure pro mol KOH, versetzt und 1 h bei 80 °C verrührt. Nach Zugabe von 0,885 g Irganox^{®} 1076 wurde das Produkt 1 h bei 18 mbar (Wasserstrahlvakuum) und anschließend bei 110°C und 1 mbar 3 h entwässert. Man erhielt ein klares Produkt.

### Beispiel 2 (Herstellung Polyol)

In einen 10 1 Laborautoklaven wurden unter Stickstoffatmosphäre 1049 g Ethylendiamin gegeben. Restsauerstoff wurde nach Schließen des Befüllstutzens durch dreimaliges Aufdrücken von 3 bar Stickstoff und anschließendes Ablassen des Überdrucks auf Atmosphärendruck entfernt. Man erwärmte unter Rühren (450 U / min) auf 150°C und dosierte 3735 g Propylenoxid über einen Zeitraum von 3 h in den Autoklaven. Man ließ 1 h nachreagieren und kühlte sodann auf 80°C ab. Nach Zugabe von 6,922 g einer 44,82 Gew.-%igen wässrigen Lösung von KOH wurde das Wasser über einen Zeitraum von 1 h bei 150 °C im Vakuum (20 mbar) durch Strippen mit Stickstoff (50 ml / min) entfernt. Anschließend wurden 1252,2 g Propylenoxid über einen Zeitraum von 1 h eindosiert. Es schloss sich eine Nachreaktionszeit von 1,5 h Dauer an. Nach einer Ausheizzeit von 30 min im Vakuum und Abkühlen auf Raumtemperatur wurden dem Ansatz zwei Anteile für Neutralisationsversuche (Beispiele 1A und 1B) entnommen. Die Katalysatorkonzentration (KOH) betrug 510 ppm. (Beispiele 2A, 2B, 2C, 2D und 2E)

### Beispiel 2 A (Vergleich) (Neutralisation mit 0,51 mol Schwefelsäure pro mol KOH)

1183,5 g des Produktes aus Beispiel 2 wurden bei 80 °C mit 4,509 g 11,82 %iger Schwefelsäure, entsprechend 0,51 mol Schwefelsäure pro mol KOH, versetzt und 1 h bei 80 °C verrührt. Nach Zugabe von 0,792 g Irganox^{®} 1076 wurde das Produkt 1 h bei 18 mbar (Wasserstrahlvakuum) und anschließend bei 110 °C und 1 mbar 3 h entwässert. Man erhielt ein klares Produkt.

### Beispiel 2 B

1179,3 g des Produktes aus Beispiel 2 wurden bei 80 °C mit 8,971 g 11,82 %iger Schwefelsäure, entsprechend 1,00 mol Schwefelsäure pro mol KOH, versetzt und 1 h bei 80 °C verrührt. Nach Zugabe von 0,799 g Irganox^{®} 1076 wurde das Produkt 1 h bei 18 mbar (Wasserstrahlvakuum) und anschließend bei 110 °C und 1 mbar 3 h entwässert. Man erhielt ein klares Produkt.

### Beispiel 2 C (Vergleich) (Neutralisation mit Phosphorsäure)

1192,8 g des Produktes aus Beispiel 2 wurden bei 80 °C mit 1,238 g 85 %iger Phosphorsäure, entsprechend 0,99 mol Phosphorsäure pro mol KOH, versetzt und 1 h bei 80°C verrührt. Nach Zugabe von 0,814 g Irganox^{®} 1076 wurde das Produkt 1 h bei 18 mbar (Wasserstrahlvakuum) und anschließend bei 110°C und 1 mbar 3 h entwässert. Man erhielt ein trübes Produkt.

### Beispiel 2 D (Vergleich) (Neutralisation mit 0,5 mol Schwefelsäure pro mol (KOH)

1189,7 g des Produktes aus Beispiel 2 wurden bei 80 °C mit 110 ml destilliertem Wasser und 4,426 g 11,87 %iger Schwefelsäure, entsprechend 0,50 mol Schwefelsäure pro mol KOH, versetzt und 1 h bei 80°C verrührt. Nach Zugabe von 0,797 g Irganox^{®} 1076 wurde das Produkt 1 h bei 18 mbar (Wasserstrahlvakuum) und anschließend bei 110 °C und 1 mbar 3 h entwässert. Nach Filtration über eine Labordrucknutsche ausgestattet mit einem Tiefenfilter T 750 der Fa. Pall wurde ein klares Produkt erhalten.

### Bespiel 2 E (nicht unter die Ansprüche fallend; Abtrennung der gebildeten Salze)

1182,4 g des Produktes aus Beispiel 2 wurden bei 80 °C mit 106 ml destilliertem Wasser und 8,819 g 11,87 %iger Schwefelsäure, entsprechend 0,99 mol Schwefelsäure pro mol KOH, versetzt und 1 h bei 80°C verrührt. Nach Zugabe von 0,790 g Irganox^{®} 1076 wurde das Produkt 1 h bei 18 mbar (Wasserstrahlvakuum) und anschließend bei 110 °C und 1 mbar 3 h entwässert. Nach Filtration über eine Labordrucknutsche ausgestattet mit einem Tiefenfilter T 750 der Fa. Pall wurde ein klares Produkt erhalten.

### Beispiel 3 (Herstellung Polyol)

In einen 10 1 Laborautoklaven wurden unter Stickstoffatmosphäre 1025,2 g Ethylendiamin gegeben. Restsauerstoff wurde nach Schließen des Befüllstutzens durch dreimaliges Aufdrücken von 3 bar Stickstoff und anschließendes Ablassen des Überdrucks auf Atmosphärendruck entfernt. Man erwärmte unter Rühren (450 U / min) auf 150 °C und dosierte 3725,7 g Propylenoxid über einen Zeitraum von 3 h in den Autoklaven. Man ließ 1 h nachreagieren und kühlte sodann auf 80°C ab. Nach Zugabe von 13,668 g einer 44,82 Gew.-%igen wässrigen Lösung von KOH wurde das Wasser über einen Zeitraum von 1 h bei 150°C im Vakuum (20 mbar) durch Strippen mit Stickstoff (50 ml / min) entfernt. Anschließend wurden 1249,1 g Propylenoxid über einen Zeitraum von 1 h eindosiert. Es schloss sich eine Nachreaktionszeit von 1,5 h Dauer an. Das alkalische Rohprodukt wurde danach noch 30 min. bei 150°C im Vakuum ausgeheizt. Die Katalysatorkonzentration (KOH) betrug 1020 ppm.

### Beispiel 3A (Vergleich) (Neutralisation mit 0,50 mol Schwefelsäure pro mol KOH)

1327,4 g des Produktes aus Beispiel 3 wurden bei 80 °C mit 9,969 g 11,87 %iger Schwefelsäure, entsprechend 0,50 mol Schwefelsäure pro mol KOH, versetzt und 1 h bei 80 °C verrührt. Nach Zugabe von 0,891 g Irganox^{®} 1076 wurde das Produkt 1 h bei 18 mbar (Wasserstrahlvakuum) und anschließend bei 110 °C und 1 mbar 3 h entwässert. Man erhielt ein klares Produkt.

### Beispiel 3 B

1299,8 g des Produktes aus Beispiel 3 wurden bei 80 °C mit 19,532 g 11,87 %iger Schwefelsäure, entsprechend 1,00 mol Schwefelsäure pro mol KOH, versetzt und 1 h bei 80 °C verrührt. Nach Zugabe von 0,891 g Irganox^{®} 1076 wurde das Produkt 1 h bei 18 mbar (Wasserstrahlvakuum) und anschließend bei 110°C und 1 mbar 3 h entwässert. Man erhielt ein klares Produkt.

### Beispiel 4 (Herstellung Polyol)

In einen 10 1 Laborautoklaven wurden unter Stickstoffatmosphäre 756,8 g Ethylendiamin gegeben. Restsauerstoff wurde nach Schließen des Befüllstutzens durch dreimaliges Aufdrücken von 3 bar Stickstoff und anschließendes Ablassen des Überdrucks auf Atmosphärendruck entfernt. Man erwärmte unter Rühren (450 U / min) auf 150 °C und dosierte 2769,8 g Propylenoxid über einen Zeitraum von 3 h in den Autoklaven. Man ließ 1 h nachreagieren und kühlte sodann auf 80°C ab. Nach Zugabe von 6,967 g einer 44,83 Gew.%igen wässrigen Lösung von KOH wurde das Wasser über einen Zeitraum von 1 h bei 150 °C im Vakuum (20 mbar) durch Strippen mit Stickstoff (50 ml / min) entfernt. Anschließend wurden 2476,4 g Propylenoxid über einen Zeitraum von 1 h eindosiert. Es schloss sich eine Nachreaktionszeit von 2 h Dauer an. Das alkalische Rohprodukt wurde danach noch 30 min. bei 150°C im Vakuum ausgeheizt. Die Katalysatorkonzentration (KOH) betrug 520 ppm.

### Beispiel 4 A (Vergleich) (Neutralisation mit Phosphorsäure)

1347,8 g des Produktes aus Beispiel 4 wurden bei 80 °C mit 1,4325 g 85 %iger Phosphorsäure, entsprechend 0,99 mol Phosphorsäure pro mol KOH versetzt und 1 h bei 80 °C verrührt. Nach Zugabe von 0,911 g Irganox^{®} 1076 wurde das Produkt 1 h bei 18 mbar (Wasserstrahlvakuum) und anschließend bei 110 °C und 1 mbar 3 h entwässert. Man erhielt ein trübes Produkt.

### Beispiel 4 B (Vergleich) (Neutralisation mit 0,49 mol SchwefelsäureS pro mol KOH)

1303,8 g des Produktes aus Beispiel 4 wurden bei 80 °C mit 118 ml destilliertem Wasser und 4,934 g 11,87 %iger Schwefelsäure, entsprechend 0,49 mol Schwefelsäure pro mol KOH, versetzt und 1 h bei 80 °C verrührt. Nach Zugabe von 0,881 g Irganox^{®} 1076 wurde das Produkt 1 h bei 18 mbar (Wasserstrahlvakuum) und anschließend bei 110 °C und 1 mbar 3 h entwässert. Nach Filtration über eine Labordrucknutsche ausgestattet mit einem Tiefenfilter T 750 der Fa. Pall wurde ein klares Produkt erhalten.

### Beispiel 4 C (nicht unter die Ansprüche fallend; Abtrennung) der gebildeten Salze

1301,6 g des Produktes aus Beispiel 4 wurden bei 80 °C mit 118 ml destilliertem Wasser und 9,892 g 11,87 %iger Schwefelsäure, entsprechend 0,99 mol Schwefelsäure pro mol KOH, versetzt und 1 h bei 80 °C verrührt. Nach Zugabe von 0,883 g Irganox^{®} 1076 wurde das Produkt 1 h bei 18 mbar (Wasserstrahlvakuum) und anschließend bei 110 °C und 1 mbar 3 h entwässert. Nach Filtration über eine Labordrucknutsche ausgestattet mit einem Tiefenfilter T 750 der Fa. Pall wurde ein klares Produkt erhalten.

Die Ergebnisse der Versuche sind in Tab. 1 zusammengefasst.

**Tab. 1**

| **Beispiel** | **Gemessene OH-Zahl [mg KOH / g]** | **Farbzahl** | **Aussehen** |
|---|---|---|---|
| 1 A (Vergleich) | 626 | 157 Hazen | klar |
| 1 B | 625 | 92 Hazen | klar |
| 2 A (Vergleich) | 624 | 4,6 Gardner | klar |
| 2 B | 624 | 1,8 Gardner | klar |
| 2 C (Vergleich) | 624 | 3,6 Gardner | trüb |
| 2 D (Vergleich) | 624 | 2,6 Gardner | klar |
| 2 E fällt nicht unter die ansprüche | 624 | 2,2 Gardner | klar |
| 3 A (Vergleich) | 622 | 4,2 Gardner | klar |
| 3 B | 620 | 3,3 Gardner | klar |
| 4 A (Vergleich) | 470 | 3,3 Gardner | trüb |
| 4 B (vergleich) | 470 | 1,8 Gardner | klar |
| 4 C fällt nicht unter die ansprüche | 469 | 1,6 Gardner | klar |

Die Bestimmung der Farbzahlen erfolgte gemäß der Vorschrift der DIN 53995, die Bestimmung der OH-Zahlen gemäß der Vorschrift der DIN 53240.

## Patentansprüche

1. Verfahren zur Herstellung von Polyolen, durch basenkatalysierte Addition von Alkylenoxiden ausgewählt aus der Gruppe bestehend aus Propylenoxid, 1,2-Butylenoxid bzw. 2,3-Butylenoxid und Styroloxid an aminogruppenhaltige Starterverbindungen in Gegenwart von Katalysatoren auf Basis von Alkalimetallhydroxiden in auf die Endproduktmenge bezogenen Konzentrationen von 0,004 bis 0,1 Gew.%, bei dem die Neutralisation des Polyols mit 0,75 bis 1 mol Schwefelsäure pro mol eingesetztem Katalysator durchgeführt wird,
wobei auf die Abtrennung der gebildeten Salze verzichtet wird.

2. Verfahren gemäß Anspruch 1, bei dem vor oder während der Addition der Alkylenoxide 10 bis 80 Gew.-%, bezogen auf die Endproduktmenge, Triglyceride zugesetzt werden.

3. Polyol, erhältlich gemäß einem oder mehreren der Ansprüche 1 und 2.

4. Verwendung von gemäß einem oder mehreren der Ansprüche 1 und 2 erhältlichen Polyolen zur Herstellung von Polyurethanen.

## Claims

1. Process for preparing polyols by base-catalysed addition of alkylene oxides selected from the group consisting of propylene oxide, 1,2-butylene oxide or 2,3-butylene oxide and styrene oxide onto amino-containing starter compounds in the presence of catalysts based on alkali metal hydroxides in concentrations, based on the amount of end product, of 0.004 to 0.1% by weight, in which the neutralization of the polyol is performed with 0.75 to 1 mol of sulphuric acid per mole of catalyst used,
wherein there is no removal of the salts formed.

2. Process according to Claim 1, in which 10 to 80% by weight, based on the amount of end product, of triglycerides are added before or during the addition of the alkylene oxides.

3. Polyol obtainable according to one or more of Claims 1 and 2.

4. Use of polyols obtainable according to one or more of Claims 1 and 2 for preparation of polyurethanes.

## Revendications

1. Procédé de fabrication de polyols par addition catalysée par une base d'oxydes d'alkylène choisis dans le groupe constitué par l'oxyde de propylène, l'oxyde de 1,2-butylène ou l'oxyde de 2,3-butylène et l'oxyde de styrène sur des composés de départ contenant des groupes amino en présence de catalyseurs à base d'hydroxydes de métaux alcalins en concentrations par rapport à la quantité de produit final de 0,004 à 0,1 % en poids, selon lequel la neutralisation du polyol est réalisée avec 0,75 à 1 mole d'acide sulfurique par mole de catalyseur utilisé,
dans lequel la séparation des sels formés est omise.

2. Procédé selon la revendication 1, dans lequel 10 à 80 % en poids, par rapport à la quantité de produit final, de triglycérides sont ajoutés avant ou pendant l'addition des oxydes d'alkylène.

3. Polyol, pouvant être obtenu selon une ou plusieurs des revendications 1 et 2.

4. Utilisation de polyols pouvant être obtenus selon une ou plusieurs des revendications 1 et 2 pour la fabrication de polyuréthanes.
